# EUROPEAN PATENT APPLICATION

(11) **EP 2 878 574 A1**
(43) Date of publication of application: **03.06.2015**
(21) Application number: 13823852.2
(22) Date of filing: 23.07.2013
(51) Int. Cl.: C01B 25/08, B09B 3/00

(54) **METHOD FOR MANUFACTURING SYNTHETIC ROCK PHOSPHATE**

(30) Priority: 25.07.2012 JP 2012165174
(71) Applicant: JX Nippon Mining & Metals Corporation, Tokyo 100-8164 (JP)
(72) Inventor: YAMAMOTO,Takaiku, Osaka-shi Osaka 541-0041 (JP); URATA,Katsuyoshi, Tokyo 100-8164 (JP)
(74) Representative: Luten, Martin Haaije
(86) International application number: PCT/JP2013/069942
(87) International publication number: WO 2014/017499

(57) **Abstract**

Provided is a method for manufacturing a synthetic rock phosphate that can be used as an alternative to a natural rock phosphate while effectively utilizing industrial by-products or industrial waste. The method for manufacturing the synthetic rock phosphate is characterized by including: charging and melting an iron raw material together with a phosphorus raw material, a silicon raw material, and a carbon material into/in a melting furnace 21; and obtaining phosphorus-containing iron as a synthetic rock phosphate by discharging molten iron 27 in which phosphorus is enriched. In this case, in order to obtain phosphorus-containing iron having a phosphorus concentration of 5 mass% or more by increasing a saturation concentration of phosphorus in the molten iron 27, a carbon concentration in the molten iron 27 is preferably 3 mass% or less. The obtained synthetic rock phosphate can be used as an alternative to a rock phosphate at the time of manufacturing ferrophororus or at the time of synthesizing phosphoric acid using a wet method or a dry method.

## Description

### Technical Field

The present invention relates to a method for manufacturing a synthetic rock phosphate which is capable of using as an alternative to a natural rock phosphate. More particularly, the present invention relates to a method for manufacturing a synthetic rock phosphate which can be reused as resources by effectively utilizing industrial by-products or industrial waste.

### Background Art

As disclosed in Non Patent Literature 1, phosphorus (P) is an essential element which constitutes a living body and acts as an important function in acquisition of energy required for maintenance of vital activity. For this reason, the phosphorus is also referred to as an "element of life" and is widely used as, for example, a chemical fertilizer or etchant, and a material to be added in iron and steel.

In the case of using the phosphorus as the chemical fertilizer, phosphoric acid synthesized from rock phosphate by a wet method is widely used as a raw material. The synthesis of the phosphoric acid by the wet method is performed in such a manner of first producing dilute phosphoric acid by decomposing the rock phosphate using sulfuric acid and separating calcium sulfate to be generated, followed by obtaining phosphoric acid by concentrating the dilute phosphoric acid up to a high concentration.

In addition, the phosphoric acid is used as the etchant or the like of a semiconductor or metal aluminum, and, in this case, phosphoric acid synthesized from rock phosphate by a dry method is widely used as a raw material. The synthesis of the phosphoric acid by the dry method is performed in such a manner of producing diphosphorus pentoxide by reducing the rock phosphate using an electric furnace and by burning yellow phosphorus, and obtaining phosphoric acid by hydrating the diphosphorus pentoxide.

In the case of using the phosphorus as the material to be added in iron and steel, ferrophosphorus obtained from the rock phosphate is used. In the manufacture of the ferrophosphorus, the rock phosphate, the silica stone, the coke, and the scrap iron are charged into and melted in the electric furnace and a phosphorus oxide (P₂O₅) contained in the rock phosphate is reduced with carbon contained in the coke in this process. Thus, it is possible to obtain ferrophosphorus when discharging molten ferrophosphorus to be produced. The ferrophosphorus produced in this way typically contains P: 20 to 28% and Si: about 4%, by mass%, the balance being Fe and impurities.

The phosphorus is widely used as described above, but rock phosphate, which is a phosphorus source (raw material) in the case of using the phosphorus, is being depleted. Therefore, recovery of phosphorus from industrial by-products or sludge containing the phosphorus or an artificial manufacture of rock phosphate is not limited to industry and is also essential for agriculture or other industries.

Various methods for recovering the phosphorus contained in the industrial by-products have been conventionally proposed. In Patent Literature 1, a method is proposed in which the phosphorus is separated and recovered from dephosphorization slag generated by a dephosphorizing treatment of molten iron in steelmaking and refining. In the method for separating and recovering the phosphorus proposed in Patent Literature 1, the amount of MnO contained in the dephosphorization slag is adjusted to be 5 to 12% using the dephosphorizing treatment of the molten iron, and the dephosphorization slag is subjected to a melting and reducing treatment by adding a separation promotor of the phosphorus together with a carbonaceous reducing agent. The phosphorus is gasified and separated by the melting and reducing treatment, and the gasified phosphorus is collected and cooled under non-oxidizing atmosphere, thereby recovering as yellow phosphorus. Alternatively, the gasified phosphorus is subjected to oxidation and burning to produce phosphorus pentoxide and the phosphorus pentoxide is dissolved in water, thereby recovering as phosphoric acid (H₃PO₄).

Furthermore, in Patent Literature 2, a method is proposed in which iron and phosphorus are recovered from slag containing phosphorus produced in steelmaking and refining. In the method for recovering the iron and the phosphorus proposed in Patent Literature 2, basicity of phosphorus-containing slag is adjusted to be 1.7 to 2.1, and an iron oxide and a phosphorus oxide contained in the phosphorus-containing slag of which the basicity is adjusted are subjected to a reduction treatment with a reducing agent, thereby obtaining phosphorus-containing molten iron. Subsequently, the slag subjected to the reduction treatment and the phosphorus-containing molten iron are allowed to cool, thereby pulverizing the slag. Here, the basicity is the content ratio of CaO and SiO₂ and can be calculated by dividing the content ratio (mass%) of CaO by the content ratio (mass%) of SiO₂.

In the method for recovering the iron and the phosphorus proposed in Patent Literature 2, since the basicity of the phosphorus-containing slag as a raw material is adjusted to be 1.7 to 2.1 and thus the slag obtained by the reduction treatment is pulverized, the pulverized slag and the massive phosphorus-containing iron can be easily separated. In addition, if a carbon concentration in the phosphorus-containing molten iron to be produced is 3 mass% or more, since a liquidus-line temperature of the molten iron becomes 1300°C or lower, the phosphorus-containing molten iron and the slag are promptly separated.

In Patent Literature 2, the obtained phosphorus-containing iron has a high phosphorus concentration, so that it is difficult to use as an iron source, and the phosphorus-containing iron is further subjected to a dephosphorizing treatment, thereby being separated into CaO-based flux in which the phosphorus is absorbed and enriched and the iron in which the phosphorus concentration is reduced. The iron, in which the phosphorus concentration is reduced, can be used as an iron source and the CaO-based flux in which the phosphorus is enriched can be used as an alternative to a natural rock phosphate.

### Citation List

### Non Patent Literature

Non Patent Literature 1: Hisao Otake et al., four others, "What is depletion crisis of phosphorus resource", Osaka University Press, 2011
Non Patent Literature 2: P. Villars et al., two authors, "Handbook of ternary alloy phase diagrams", ASM International, 1995

### Patent Literature

Patent Literature 1: JP 5-22643 B
Patent Literature 2: JP 2011-74441 A

### Summary of Invention

### Technical Problem

As described above, since the rock phosphate as a raw material of the phosphorus is being depleted, it is desired to recover the phosphorus from the industrial by-products or sludge containing the phosphorus and to artificially manufacture the rock phosphate.

According to the method for separating and recovering the phosphorus proposed in Patent Literature 1 described above, although Mn ore is added such that the amount of MnO contained in the dephosphorization slag is adjusted to be 5 to 12%, since the Mn ore is also depleted, there is a problem in industrial establishment.

In addition, according to the method for recovering the iron and the phosphorus proposed in Patent Literature 2 described above, since the basicity of the phosphorus-containing slag as the raw material is adjusted to be 1.7 to 2.1 such that the slag obtained by the reduction treatment is pulverized and then is separated from the phosphorus-containing iron, fluidity of the molten slag and the phosphorus-containing molten iron decreases, so that the handling becomes difficult. Furthermore, the present inventors have studied that the phosphorus content of the phosphorus-containing iron obtained by the reduction treatment is reduced when the carbon concentration in the phosphorus-containing molten iron to be produced is 3 mass% or more. The method for recovering the iron and the phosphorus proposed in Patent Literature 2 is not assumed that the phosphorus-containing iron obtained by the reduction treatment is used as a phosphorus source and is necessary to further perform the dephosphorizing treatment on the phosphorus-containing iron.

The present invention has been made in consideration of these problems, and an object thereof is to provide a method for manufacturing a synthetic rock phosphate which can be reused as resources by effectively utilizing industrial by-products or industrial waste.

### Solution to Problem

In order to solve the above problems, the present inventors studied a method for recovering phosphorus from dephosphorization slag produced by a dephosphorizing treatment of steelmaking and refining. Here, the amount of phosphorus contained in the dephosphorization slag is about 2.0 to 3.5 mass% and the production amount of the dephosphorization slag is approximately 30 to 40 kg/thm. Meanwhile, since the production amount of iron is about 100 million tons/year in Japan and about 1.5 billion tons/year in the world, the phosphorus contained in the dephosphorization slag becomes about 100,000 tons in Japan and about 1.5 million tons in the world. Accordingly, if the method for recovering the phosphorus from the dephosphorization slag can be realized, it can be industrially established.

As a result of intensive studies through various tests, the present inventors was found that when an iron raw material was charged into a melting furnace of a type of carbon material packed bed together with dephosphorization slag and the iron raw material was heated and melted along with combustion of a carbon material, the phosphorus as an oxide contained in the dephosphorization slag was reduced and was enriched in the molten iron. It was found that when the molten iron was discharged and was used as phosphorus-containing iron, the molten iron could be used as an alternative to a natural rock phosphate from the fact that the phosphorus was enriched in the molten iron.

Furthermore, as a result of intensive studies through various tests, the present inventors was found that, even in a submerged arc furnace, when the iron raw material was charged into and melted in the furnace together with the dephosphorization slag and a carbon material and the molten iron in which the phosphorus was enriched was discharged and was used as phosphorus-containing iron, the molten iron could be used as an alternative to a natural rock phosphate as in the case of using the melting furnace of the type of carbon material packed bed.

The present invention is made based on the above findings and the gist thereof is a method for manufacturing a synthetic rock phosphate of (1) and (2) to be described below.

(1) A method for manufacturing a synthetic rock phosphate characterized by including: charging and melting an iron raw material together with a phosphorus raw material, a silicon raw material, and a carbon material into/in a melting furnace; and obtaining phosphorus-containing iron as a synthetic rock phosphate by discharging molten iron in which phosphorus is enriched.

(2) The method for manufacturing the synthetic rock phosphate according to (1) described above is characterized in that a carbon concentration in the molten iron is 3 mass% or less.

### Advantageous Effects of Invention

According to a method for manufacturing a synthetic rock phosphate of the present invention, an iron raw material is charged into and melted in a melting furnace together with a phosphorus raw material, and phosphorus-containing iron is obtained from molten iron in which phosphorus is enriched, so that it is possible to recover the phosphorus-containing iron contained in the phosphorus raw material. The content of the phosphorus-containing iron increases due to enrichment of the phosphorus, the phosphorus-containing iron can be used as an alternative to a natural rock phosphate, that is, as a synthetic rock phosphate. When dephosphorization slag or sewage sludge is used as the phosphorus raw material and iron scrap is used as the iron raw material, it is possible to obtain the phosphorus-containing iron which can be reused as resources by effectively utilizing industrial by-products or industrial waste.

### Brief Description of Drawings

Fig. 1 is a diagram illustrating a process flow which can be employed in a method for manufacturing a synthetic rock phosphate according to the present invention.
Fig. 2 is a cross sectional view conceptually illustrating a structure and a use state of a melting furnace of a type of carbon material packed bed used in Example.

### Description of Embodiments

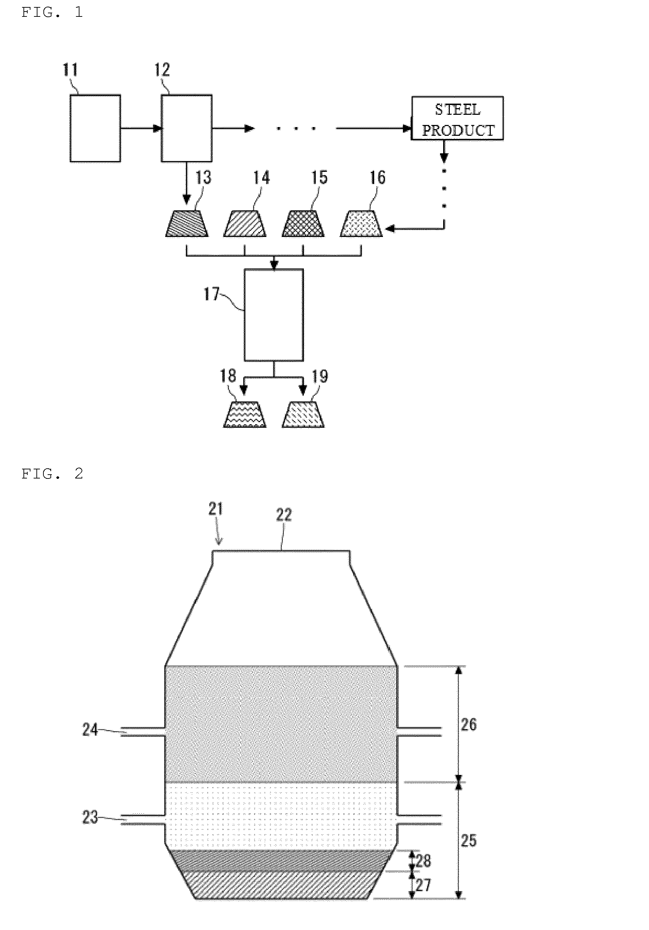

A method for manufacturing a synthetic rock phosphate of phosphorus-containing iron according to the present invention will be described with reference to a process flow illustrated in Fig. 1 to be described below.

Fig. 1 is a diagram illustrating a process flow which can be employed in the method for manufacturing the synthetic rock phosphate according to the present invention. In the process flow illustrated in the same drawing, dephosphorization slag produced by steelmaking and refining is regarded as a phosphorus raw material in the manufacture of phosphorus-containing iron.

In the steelmaking and refining, ores containing mainly an iron source and coke as a reducing material are alternately fed into a blast furnace 11 from a top of the furnace and are stacked in layers. The ores and coke are heated by a gas (heated gas) ascending and blown from a tuyere while gradually lowering in the furnace from the top thereof, wherein the ores are softened and melted while being reduced, thereby becoming molten iron and being discharged from a bottom of the furnace. The discharged molten iron typically contains phosphorus of about 0.1 mass%.

When the phosphorus contained in the molten iron is dissolved as a solid solution, the resulting steel product may be significantly deteriorated in properties such as high temperature ductility, corrosion resistance, or weldability, and thus it is necessary to reduce the amount of the phosphorus contained in the molten iron using a dephosphorizing treatment in the steelmaking and refining. In the process flow illustrated in the same drawing, the phosphorus contained in the molten iron is oxidized to be migrated into slag in the dephosphorization furnace 12 when high-pressure oxygen is blown in a state where massive quicklime, limestone or the like as a dephosphorizing agent is added to the molten iron together with an iron scrap. Thus, the amount of phosphorus contained in the molten iron to be discharged from the dephosphorization furnace 12 is reduced to about 0.01 mass%, and phosphorus of about 2.0 to 3.5 mass% is contained in dephosphorization slag 13.

The molten iron subjected to the dephosphorizing treatment can be finished with a steel product by being subjected to a treatment such as decarburizing or refining, casting, and rolling. The steel product is recovered as an iron scrap 16 (industrial waste) after being used as various fields.

In the process flow illustrated in the same drawing, the iron scrap (iron raw material) 16 as well as the dephosphorization slag (phosphorus raw material) 13, the silica stone (silicon raw material) 14 and the coke (carbon material) 15 is charged into and melted in a melting furnace 17 of a type of carbon material packed bed. As a result, molten slag is produced together with the molten iron at a lower part of the melting furnace 17, and the phosphorus contained in the dephosphorization slag 13 is migrated and enriched into the molten iron. The molten iron, into which the phosphorus is enriched, is discharged from a furnace bottom of the melting furnace 17, resulting in obtaining phosphorus-containing iron 18. In addition, the molten slag is discharged from the lower part of the melting furnace 17, resulting in obtaining slag 19.

The method for manufacturing the synthetic rock phosphate according to the present invention which can employ such a process flow is characterized in that the synthetic rock phosphate is the phosphorus-containing iron which can be obtained in such a manner that the iron raw material is charged into and melted in the melting furnace together with the phosphorus raw material, the silicon raw material, and the carbon material, thereby discharging the molten iron into which the phosphorus is enriched. With respect to the method for manufacturing the synthetic rock phosphate according to the present invention, reasons defined as described above and preferred aspects will be described below.

The phosphorus raw material is an industrial waste or an industrial by-product which contains phosphorus, and more specifically, can use dephosphorization slag, sewage sludge, or the like. As described above, since the dephosphorization slag contains the sufficient amount of phosphorus and is produced in great quantities, the dephosphorization slag is preferably used as the phosphorus raw material in the method for manufacturing the synthetic rock phosphate according to the present invention, from the viewpoint of stably ensuring the phosphorus raw material.

Iron scrap or crude steel can be used as the iron raw material, but the iron scrap as an industrial waste is preferably used from the viewpoint of re-use of resources.

In order to adjust basicity of the molten slag produced with the molten iron, the silicon raw material is charged into the melting furnace. As the silicon raw material, it is possible to use, for example, silica stone or silica sand, waste glass, silicon scrap, and SiC scrap. Here, the silicon scrap is a chip containing silicon and includes sludge-like one. Specifically, the silicon scrap corresponds to chips which are generated at the time of processing a silicon wafer for solar panel using chemical mechanical polishing or the like or chips which are generated at the time of fabricating a liquid crystal display or at the time of processing a silicon wafer of a semiconductor device. The SiC is used for a device such as a transistor in a harsh environment, but a chip generated at the time of creating such a device is the SiC scrap. From the viewpoint of re-use of the industrial waste, the waste glass or the silicon chips, and the SiC scrap are preferably used as the silicon raw material.

The carbon material is provided for the purpose of carrying out the reaction with a combustion-supporting gas fed from the tuyere and is a solid material containing carbon as a main component. As the carbon material, it is possible to use, for example, coke or charcoal, biomass, RDF, waste wood, waste pulp, and pulverized coal. Here, the "RDF" is an abbreviation of "Refuse Derived Fuel" and means a carbon material derived from the waste. The carbon material may contain non-solid carbon materials, for example, coal tar or pitch and may contain coal if being within a usable range in the melting furnace.

In these phosphorus raw material, iron raw material, silicon raw material, and carbon material, one kind of them may be alone used and two or more kinds of them may be used by blending at a predetermined ratio.

The method for manufacturing the synthetic rock phosphate according to the present invention can use a melting furnace of a type of carbon material packed bed or a submerged arc furnace as the melting furnace to recover the phosphorus contained in the phosphorus raw material. The melting furnace of the type of carbon material packed bed is a cylindrical furnace having an opened upper end as a basic structure and includes a tapping hole positioned at a bottom or in the vicinity thereof and a tuyere having a feeding port provided at a region (hereinafter, referred to as a "first region") of a predetermined height from the bottom of the furnace. Specifically, a cylindrical furnace of a converter furnace type illustrated in Fig. 2 of Example to be described below or a cylindrical furnace of a blast furnace type can be used as the melting furnace. The melting furnace may be a furnace having capacity of about 10 t and may be a furnace having large capacity exceeding 200 t without being particularly limited with respect to the shape or size.

The carbon material is packed in the first region, and the phosphorus raw material, the iron raw material, the silicon raw material are deposited on a region (hereinafter, referred to as a "second region") having a predetermined height over the first region, and the carbon material is further deposited on the second region as necessary. In the second region, the deposition is typically performed in the form of alternate laminating of the carbon material and a mixed raw material consisting of the phosphorus raw material, the iron raw material, and the silicon raw material.

Among the phosphorus raw material, the iron raw material, the silicon raw material, and the carbon material charged into the melting furnace as described above, the carbon material is mainly burned while a fluid containing the combustion-supporting gas is fed from the tuyere. Here, the combustion-supporting gas is a gas containing oxygen molecules. In the presence of the deposited carbon material, the carbon material produces a carbon monoxide gas by a partial oxidation reaction with the oxygen molecules. The phosphorus raw material, the iron raw material, and the silicon raw material are heated and melted by combustion heat of the carbon material, thereby producing molten iron and molten slag. The produced molten iron and molten slag drop down, thereby forming a molten iron phase 27 at the bottom of the melting furnace and forming concurrently a molten slag phase on the molten iron phase 27.

In the process, since oxides of the phosphorus contained in the phosphorus raw material are reduced by a reduction reaction with the carbon material or the carbon monoxide gas and then are dissolved in the molten iron, the phosphorus contained in the phosphorus raw material is migrated and enriched into the molten iron. When the molten iron is discharged from the melting furnace, it is possible to obtain iron (phosphorus-containing iron) into which the phosphorus is enriched.

As described above, in the method for manufacturing the synthetic rock phosphate according to the present invention, the phosphorus contained in the phosphorus raw material is enriched into the molten iron and then is recovered as the phosphorus-containing iron. The obtained phosphorus-containing iron is regarded as an alternative to a natural rock phosphate, that is, synthetic rock phosphate. The synthetic rock phosphate can be used as an alternative to the natural rock phosphate, for example, at the time of manufacturing ferrophosphorus or at the time of synthesizing a phosphoric acid by a wet method or a dry method. Thus, the synthetic rock phosphate obtained by the manufacturing method of the present invention can be used to manufacture the ferrophosphorus or to synthesize the phosphate using the existing equipment and process, thereby reusing the recovered phosphorus in a variety of applications.

In addition, according to the method for manufacturing the synthetic rock phosphate of the present invention, since the phosphorus-containing iron is regarded as the synthetic rock phosphate without performing the dephosphorizing treatment, it is possible to improve manufacturing efficiency while reducing cost required for manufacturing the synthetic rock phosphate.

Meanwhile, when the molten slag is discharged from the melting furnace, the slag can be obtained and the obtained slag can be used as a slag-forming agent for the blast furnace or the like because the phosphorus has been removed. In addition, the obtained slag can be used as a roadbed material.

According to the method for manufacturing the synthetic rock phosphate of the present invention, since the obtained phosphorus-containing iron is the synthetic rock phosphate, it is preferred to increases as much as possible the phosphorus concentration in the phosphorus-containing iron. The phosphorus concentration in the phosphorus-containing iron varies depending on the saturation concentration of the phosphorus in the molten iron and the blending of the phosphorus raw material, the iron raw material, and the carbon material.

With respect to the relation between the carbon concentration and the saturation concentration of the phosphorus in the molten iron, as disclosed in Non-Patent Literature 2, as the carbon concentration in the molten iron increases, the saturation concentration of the phosphorus decreases.

Therefore, in the method for manufacturing the synthetic rock phosphate according to the present invention, the carbon concentration in the molten iron is preferably 3 mass% or less to increase the saturation concentration of the phosphorus in the molten iron and obtain the phosphorus-containing iron having the phosphorus concentration of 5 mass% or more. In addition, the carbon concentration in the molten iron is more preferably 2 mass% or less to further increase the saturation concentration of the phosphorus in the molten iron and obtain the phosphorus-containing iron having the phosphorus concentration of 10 mass% or more.

The carbon concentration in the molten iron may be adjusted by changing the height of the carbon material packed bed or the particle size of the carbon material, for example. Specifically, when the height of the carbon material packed bed is reduced or the particle size of the carbon material is increased, a possibility of contact between the carbon material and the molten iron becomes lower, so that the carbon concentration in the molten iron decreases. On the other hand, when the height of the carbon material packed bed is increased or the particle size of the carbon material is reduced, a possibility of contact between the carbon material and the molten iron becomes higher, so that the carbon concentration in the molten iron increases.

Meanwhile, even when the saturation concentration in the molten iron is increased by the adjustment of the carbon concentration, the phosphorus is insufficient or the oxides of phosphorus are not reduced depending on the blending of the phosphorus raw material, the iron raw material, and the carbon material, so that the phosphorus concentration in the phosphorus-containing iron is decreased. With respect to the blending of the iron raw material, the phosphorus raw material, and the carbon material and the phosphorus concentration in the obtained phosphorus-containing iron, standards thereof are indicated in Table 1. The standards indicated in Table 1 are standards in the case of using iron scrap in Example to be described below as the iron raw material, in the case of using dephosphorization slag in Example to be described below as the phosphorus raw material, and in the case of using coke in Example to be described below as the carbon material.

**[Table 1]**

| Operation standard | | | |
|---|---|---|---|
| Iron raw material (t) | Phosphorus raw material (t) | Carbon material (kg) | P concentration in molten iron (mass%) |
| 0.99 | 0.34 | 180 | 1 |
| 0.58 | 1.7 | 330 | 5 |
| 0.19 | 3.4 | 485 | 10 |

In the method for manufacturing the synthetic rock phosphate according to the present invention, the molten iron into which the phosphorus is enriched is discharged from the melting furnace, thereby obtaining the phosphorus-containing iron, but the discharged molten iron may be used as phosphorus-containing iron having desired granularity by crushing and granulating it after appropriately pouring it into and cooling in a cast. The phosphorus-containing iron of the present invention is easily crushed because the phosphorus is contained at a saturation concentration for a carbon concentration or at a state close to the saturation concentration. Similarly, the discharged molten slag may be also used as slag having desired granularity by crushing and granulating it after appropriately cooling it.

In the method for manufacturing the synthetic rock phosphate according to the present invention, basicity (CaO/SiO₂) of the molten slag is preferably 0.6 to 1.6. The basicity of the molten slag can be adjusted by changing the amount of silicon raw material charged into the melting furnace. When the basicity of the molten slag is 0.6 to 1.6, fluidity of the molten slag is improved, so that the molten iron and the molten slag can be promptly separated from each other and can be easily discharged from the melting furnace, thereby realizing a stable operation. In addition, when the basicity of the molten slag is 0.6 to 1.6, the molten slag discharged from the melting furnace can be uniformly granulated with water and thus a treatment of adjusting granularity of the granulated slag is not necessary.

### Example

In order to verify effects obtained by the method for manufacturing the synthetic rock phosphate according to the present invention, a method was performed which obtained the phosphorus-containing iron by charging and melting the iron raw material together with the phosphorus raw material, the silicon raw material, and the carbon material and discharging the molten iron into which the phosphorus was enriched.

Fig. 2 is a cross sectional view conceptually illustrating a structure and a use state of a melting furnace of a type of carbon material packed bed used in Example. A melting furnace 21 of a type of carbon material packed bed illustrated in the same drawing is a cylindrical furnace of a converter furnace type and includes an opening 22 for exhausting an in-furnace gas and charging a raw material on an upper part of the furnace, a primary tuyere 23 for blowing a combustion-supporting gas and fuel at a lower wall of the furnace, a secondary tuyere 24 for blowing the combustion-supporting gas at an upper wall of the furnace, a tapping hole (not illustrated) for discharging molten iron on a bottom of the furnace, and a slag-discharging port (not illustrated) for discharging slag above the tapping hole.

The dimension of the melting furnace 21 was 1.5 m in diameter, 3.8 m in height from the bottom of the furnace to the opening of the furnace, and 6.0 m³ in internal volume. The melting furnace 21 was provided with four primary tuyeres 23 at intervals of 90° on a sidewall located at a position of 0.8 m from the bottom of the furnace and four secondary tuyeres 24 at intervals of 90° on a sidewall located at a position of 1.2 m from the bottom of the furnace. In addition, the melting furnace 21 was provided with the tapping hole in a central part of the bottom of the furnace and one slag-discharging port on a position of 0.73 m from the bottom of the furnace.

The iron raw material was charged into and melted in the melting furnace 21 together with the phosphorus raw material, the silicon raw material, and the carbon material. The dephosphorization slag was used as the phosphorus raw material, and a representative composition of the dephosphorization slag was CaO: 50%, SiO₂: 18%, T. Fe: 10%, and P₂O₅: 7% (if P, 3%), by mass%. In addition, the waste glass was used as the silicon raw material, and a representative composition of the waste glass was SiO₂: 80%, B₂O₅: 10%, and Al₂O₃: 3%, by mass%. The coke and the pulverized coal were used as the carbon material, and a chemical composition of the coke and the pulverized coal is indicated in Table 2. The iron scrap was used as the iron raw material, and the iron scrap had iron purity of 99 mass%, bulk density of 3500 kg/m³, and maximum dimension of 0.4 m.

**[Table 2]**

| Type | Composition (mass%) | | | | | | | |
|---|---|---|---|---|---|---|---|---|
| | C | H | O | SiO₂ | Al₂O₃ | CaO | Mgo | Moisture |
| Coke | 88.0 | 0.5 | 0.0 | 6.9 | 3.5 | 0.3 | 0.3 | 2.0 |
| Pulverized coal | 75.0 | 4.3 | 8.0 | 7.6 | 3.8 | 0.3 | 0.3 | 2.0 |

A coke packed bed 25 was formed at a predetermined height from the bottom of the furnace in the case of charging the iron raw material together with these kinds of the phosphorus raw material, the silicon raw material, and the carbon material. The coke packed bed 25 was constituted by only the coke, the height of the bed was equal to or lower than the secondary tuyere and was set to be a position close to the secondary tuyere, and thus it was considered that the primary tuyere was included in the coke packed bed. Specifically, the coke packed bed 25 was set to have the height of the bed of about 1.13 m from the bottom of the furnace. A mixed raw material containing the phosphorus raw material, the iron raw material, and the silicon raw material and a carbon material containing the carbon material were alternately laminated on the coke packed bed 25, thereby forming a laminated-type packed bed 26. An uppermost height of the laminated-type packed bed 26 formed in this way was about 3.3 m from the bottom of the furnace.

The blending of the charged raw materials was performed under the following conditions: the iron scrap was 500 kg, the coke was 70 kg, the RDF was 85 kg, the waste glass was 600 kg, and the dephosphorization slag was 3850 kg per 1 t of the obtained molten iron, respectively. The oxygen as the combustion-supporting gas blown from the primary tuyere and the secondary tuyere was a rate of 362 Nm³ per 1 t of the obtained molten iron. In addition, the pulverized coal was supplied with the oxygen from the primary tuyere to have a rate of 250 kg per 1 t of the obtained molten iron.

When the iron scrap and the like was heated for about 108 minutes with respect to each charge under these conditions, the molten iron of about 1.07 t and the slag of about 4.1 t were produced while having a temperature of about 1400°C in the furnace. The molten iron was discharged from the tapping hole and thus was granulated with water, thereby obtaining the phosphorus-containing iron, and the chemical composition of the phosphorus-containing iron contained C: 2% and P: 10%, by mass%, the balance being Fe and impurities. Meanwhile, the slag was discharged from the slag-discharging port and thus was granulated with water, thereby obtaining the slag, the representative composition of the slag was CaO: 46%, SiO₂: 30% (CaO/SiO₂ = 1.53), and Al₂O₃: 5%, by mass, and the concentration of P₂O₅ contained in the slag was 0 mass%.

Accordingly, it was revealed that the phosphorus contained in the phosphorus raw material could be recovered by the method for manufacturing the synthetic rock phosphate according to the present invention. In addition, it was possible to obtain the phosphorus-containing iron which could be reused as resources by effectively utilizing the industrial by-products or the industrial waste.

### Reference Signs List

- 11:: blast furnace
- 12:: dephosphorization furnace
- 13:: dephosphorization slag (phosphorus raw material)
- 14:: silica stone (silicon raw material)
- 15:: coke (carbon material)
- 16:: iron scrap (iron raw material)
- 17:: melting furnace of a type of carbon material packed bed
- 18:: phosphorus-containing iron (synthetic rock phosphate)
- 19:: slag
- 21:: melting furnace of a type of carbon material packed bed
- 22:: opening
- 23:: primary tuyere
- 24:: secondary tuyere
- 25:: coke packed bed
- 26:: laminated-type packed bed
- 27:: molten iron phase
- 28:: molten slag phase

## Claims

1. A method for manufacturing a synthetic rock phosphate, comprising:
charging and melting an iron raw material together with a phosphorus raw material, a silicon raw material, and a carbon material into/in a melting furnace; and
obtaining phosphorus-containing iron as a synthetic rock phosphate by discharging molten iron in which phosphorus is enriched.

2. The method for manufacturing the synthetic rock phosphate according to claim 1, wherein a carbon concentration in the molten iron is 3 mass% or less.
